(19) Europäisches Patentamt
European Patent Office
Office européen des brevets

(11) **EP 0 912 214 B1**

(12) **EUROPÄISCHE PATENTSCHRIFT**

(45) Veröffentlichungstag und Bekanntmachung des Hinweises auf die Patenterteilung:
**04.10.2001  Patentblatt 2001/40**

(51) Int Cl.[7]: **A62D 3/00**

(21) Anmeldenummer: **97921830.2**

(86) Internationale Anmeldenummer:
**PCT/EP97/02211**

(22) Anmeldetag: **30.04.1997**

(87) Internationale Veröffentlichungsnummer:
**WO 97/43014 (20.11.1997 Gazette 1997/50)**

(54) **ABBAU VON BIOLOGISCH ABBAUBAREN POLYESTERAMIDEN MIT ENZYMEN**

DEGRADATION OF BIODEGRADABLE POLYESTER AMIDES WITH ENZYMES

DEGRADATION D'AMIDES DE POLYESTER BIODEGRADABLES AVEC DES ENZYMES

(84) Benannte Vertragsstaaten:
**BE CH DE DK FI FR GB IT LI NL SE**

(30) Priorität: **13.05.1996  DE 19619236**

(43) Veröffentlichungstag der Anmeldung:
**06.05.1999  Patentblatt 1999/18**

(73) Patentinhaber: **BAYER AG**
**51368 Leverkusen (DE)**

(72) Erfinder: **KOCH, Rainhard**
**D-51065 Köln (DE)**

(56) Entgegenhaltungen:
- **DATABASE WPI Section Ch, Week 7943 Derwent Publications Ltd., London, GB; Class A23, AN 79-78352B XP002034329 & JP 54 119 595 A (AGENCY OF IND SCI & TECHNOLOGY) , 17.September 1979**
- **DATABASE WPI Section Ch, Week 7943 Derwent Publications Ltd., London, GB; Class A23, AN 79-78350B XP002034330 & JP 54 119 593 A (AGENCY OF IND SCI & TECHNOLOGY) , 17.September 1979 in der Anmeldung erwähnt**
- **DATABASE WPI Section Ch, Week 9427 Derwent Publications Ltd., London, GB; Class B04, AN 94-220500 XP002034331 & JP 06 153 941 A (NAGASE SANGYO KK) , 3.Juni 1994**
- **PATENT ABSTRACTS OF JAPAN vol. 095, no. 011, 26.Dezember 1995 & JP 07 194371 A (NAGASE & CO LTD), 1.August 1995,**
- **H-D. JAKUBKE, H. JESCHKEIT: 'Lexikon Biochemie', 1981, VERLAG CHEMIE, LEIPZIG**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft den vollständigen Abbau von Formkörpern, Flächengebilden oder Schäumen aus Polyesteramiden mit Enzymen.

Vollständig biologisch abbaubare und kompostierbare Werkstoffe gewinnen zunehmend an Bedeutung. In den letzten Jahren ist eine Vielzahl derartiger Polymere mit dem Ziel entwickelt worden, einen Kunststoff verfügbar zu haben, der durch Kompostierung verwertet werden kann. Zur gleichen Zeit sind verschiedene Verordnungen und Normen erlassen worden, die den Zugang derartiger Materialien zur Kompostierung regeln bzw. die schadlose Kompostierbarkeit nachzuweisen vermögen (z.B. DIN-Norm 54 900). Unter biologischem Abbau wird in diesem Zusammenhang immer verstanden, daß die so bezeichneten Materialien in Gegenwart von Mikroorganismen durch diese vollständig zu Kohlendioxid und Biomasse verstoffwechselt werden.

Von Polyesteramiden ist bekannt, daß sie einem biologischen Abbau unterliegen können (J. AppL Polym. Sci., 1979, 1701-1711, US-P 4 343 931, US-P 4 529 792, JP 79 119 593, JP 79 119 594). Aus EP-A 641 817 sind Polyesteramide bekannt, die einfach produziert werden können und zudem vollständig biologisch abbaubar sind. JP 54119595 beschreibt ein Verfahren zum Abbau von Polyesteramiden mit lipasen bzw. einer Esterase.

Von einigen Kunststoffen ist bekannt, daß deren Abbaubarkeit nicht nur durch das Wachstum von Mikroorganismen auf dem Polymer nachzuweisen ist, sondern auch mit Hilfe von Enzymen detektiert werden kann. Dabei wird das Prüfmaterial mit geeigneten Enzymen inkubiert und die Abbauprodukte werden analysiert (JP 56 022 324, DE-OS 2 632 007, Polymer Degradation and Stability, 1992, 241-248).

Es wurde gefunden, daß Polyesteramide mit Hilfe von Enzymen abgebaut werden können. Der gefundene Effekt geht jedoch weit über einen enzymatischen Abbau zum Nachweis einer prinzipiellen biologischen Abbaubarkeit hinaus. Es wurde überraschenderweise gefunden, daß ausgewählte Enzyme in der Lage sind, Polyesteramide vollständig zu hydrolysieren. Dabei wird das Molekulargewicht des Polymers so weit reduziert, daß daraus hergestellte Produkte vollständig aufgelöst werden. Der enzymatische Abbau gelingt ohne eine aufwendige Pufferung der enzymhaltigen Lösung. Inkubiert man dagegen reine Polyester mit den sie abbauenden Enzymen, so kommt es wegen der Freisetzung saurer Gruppen zu einer starken Ansäuerung. Hält man den pH-Wert nicht durch Pufferung oder Zusatz von Lauge konstant, so kommt der Abbau bald zum Stillstand, da die meisten Esterasen und Lipasen bei niedrigen pH-Werten nicht mehr aktiv sind.

Gegenstand der Erfindung ist ein Verfahren zum enzymatischen Abbau von Polyesteramiden, wobei die Polyesteramide in einer wäßrigen Lösung, die gepuffert sein kann, mit Enzymen ausgewählt aus der Gruppe der Proteasen behandelt werden.

Als Enzyme, die die Polyesteramide abbauen, sind prinzipiell all jene einsetzbar, die die im Polymer enthaltenen Ester- und Amidbindungen spalten können.

Der Abbau wird in einer wässrigen Lösung durchgeführt, die gepuffert sein kann. Der pH- Wert kann zwischen 3 und 11 liegen, bevorzugt liegt er zwischen 5 und 9 und besonders bevorzugt zwischen 7 und 8.

Folgende Puffer sind beispielsweise erfindungsgemäß einsetzbar: Citrat, Acetat, Phosphat, Formiat, Carbonat, Tris-hydroxymethylaminomethan, Triethanolamin, Imidazol, Oxalat, Tartrat, Fumarat, Maleinat, Phthalat, Succinat, Ethylendiamin sowie Gemische mehrerer von ihnen. Bevorzugt werden Acetat, Phosphat und Citrat als Puffer eingesetzt.

Die Temperatur, bei der der enzymatische Abbau durchgeführt wird, kann zwischen 10 und 90°C liegen, bevorzugt liegt sie zwischen 20 und 70°C und besonders bevorzugt zwischen 30 und 50°C.

Das Verfahren kann auf verschiedene Weise durchgeführt werden:

Das Polymer wird der wässrigen Enzym-enthaltenden Lösung zugesetzt. Das biologisch abbaubare Polymer kann als Film, Folie oder Granulat zagesetzt werden. Formkörper können als Ganzes oder zerkleinert zugesetzt werden. Beschichtete oder verklebte Materialien oder Materialien, bei denen mit biologisch abbaubaren Polymeren Beschichtungen aufgetragen wurden oder Verklebungen erzeugt wurden, wie beispielsweise Papier oder Pappe sowie beschichtetes Papier oder Pappe, können als Ganzes oder zerkleinert der enzymhaltigen Lösung zugesetzt werden.

Weiter kann man die wässrige enzymhaltige Lösung durch Aufsprühen auf die abzubauende Beschichtung oder den abzubauenden Formkörper auftragen.

Als Enzyme können Proteasen eingesetzt werden. Bevorzugt stammen die Proteasen aus Bakterien der Gattung *Bacillus*, besonders bevorzugt eignen sich Proteasen der Organismen *Bacillus alcalophilus* und *Bacillus licheniformis*. Diese Proteasen sind allgemein zugänglich und im Handel erhältlich (vgl. Beispiele).

Geeignete Mikroorganismen zur Herstellung der erfindungsgemäß geeigneten Enzyme können nach den üblichen Methoden der Mikrobiologie isoliert werden, z.B. durch Anzucht auf übliche Nährmedien. und Prüfung der Abbauaktivität. Die Isolierung und Reinigung der Enzyme erfolgt ebenfalls nach den üblichen Methoden (Manual of Methods fvor General Bacteriology, ASM, Washington 1981).

Die verwendeten Polyesteramide haben bevorzugt Esteranteile zwischen 35 und 70 %, insbesondere 35 bis 60 Gew.%, enthaltend aliphatische Dialkohole mit einer Kettenlänge von $C_2$-$C_{12}$, bevorzugt $C_2$-$C_6$, aliphatische Dicar-

bonsäuren oder deren Ester mit einer Kettenlänge von $C_2$-$C_{12}$, bevorzugt $C_2$-$C_6$, Aminocarbonsäuren oder deren Ester mit einer Kettenlänge von $C_1$-$C_{12}$, bevorzugt $C_4$-$C_6$ bzw. cyclischen Lactamen mit einer Ringgröße von $C_5$ bis $C_{12}$, bevorzugt $C_6$-$C_{11}$ bzw. einem 1:1-Salz aus aliphatischer Dicaibonsäure und aliphatischem Diamin mit einer Kettenlänge von $C_4$-$C_{12}$, bevorzugt $C_4$-$C_6$, mit gegebenenfalls 0,01 bis 5 Gew.%, bevorzugt 0,01 bis 2 Gew.% an Verzweiger. Sie haben einen Schmelzpunkt von mehr als 75°C und ein mittleres Molekulargewicht $\overline{M}w > 30\,000$.
Die Monomere können aus folgenden Gruppen stammen

Dialkohole wie Ethylenglykol, 1,4-Butandiol, 1,3-Propandiol, 1,6-Hexandiol, Diethylenglykol u.a.
und/oder

Dicarbonsäure wie Oxalsaure, Bernsteinsäure, Adipinsäure u.a. auch in Form ihrer jeweiligen Ester (Methyl-, Ethyl-usw.)
und/oder

Hydroxycarbonsäuren und Lactone wie Caprolacton u.a.
und/oder

Aminoalkohole wie Ethanolamin, Propanolamin usw.
und/oder

cyclische Lactame wie e-Caprolactam oder Laurinlactam usw.
und/oder

ω-Aminocarbonsäuren wie Aminocapronsäure usw.
und/oder

Mischungen (1:1 Salze) aus Dicarbonsäuren wie Adipinsäure, Bernsteinsäure usw. und Diaminen wie Hexamethylendiamin, Diaminobutan usw.

Ebenso können sowohl hydroxyl- oder säureterminierte Polyester mit Molekulargewichten zwischen 300 und 10 000 als esterbildende Komponente eingesetzt werden.

Die Polyesteramide haben vorzugsweise als cyclisches Lactam Caprolactam und als esterbildende Komponenten 1,4-Butandiol und Adipinsäure.

Die Polyesteramide können aus dem 1:1 Salz aus aliphatsicher Dicarbonsäure und aliphatischem Diamin, vorzugsweise dem "AH-Salz" aus Adipinsäure und 1,6-Hexamethylendiamin hergestellt werden.

Bevorzugte Polyesteramide enthalten als Aminocarbonsäurebaustein die 6-Aminohexansaure.

Die Synthese der Polyesteramide kann sowohl nach der "Polyamidmethode" durch stöchiometrisches Mischen der Ausgangskomponenten gegebenenfalls unter Zusatz von Wasser und anschließendes Entfernen von Wasser aus dem Reaktionsgemisch als auch nach der "Polyestermethode" durch Zugabe eines Überschusses an Diol mit Veresterung der Säuregruppen und nachfolgender Umesterung bzw. Umamidierung dieser Ester erfolgen. In diesem zweiten Fall wird neben Wasser auch der Überschuß an Glykol wieder abdestilliert.

Die erfindungsgemäßen Polyesteramide können weiterhin 0,1 bis 5 Gew.%, bevorzugt 0,1 bis 1 Gew.% an Verzweigern enthalten. Diese Verzweiger können z.B. trifunktionelle Alkohole wie Trimethylolpropan oder Glycerin, tetrafunktionelle Alkohole wie Pentaerythrit, trifunktionelle Carbonsäuren wie Citronensäure sein.

Die erfindungsgemäßen Polyesteramide können gegebenenfalls mit üblichen Additiven wie beispielsweise Weichmachern, Schlagzähmodifikatoren, Flammschutzmitteln, Hydrophobierungsmitteln, Nukleierungsmitteln und/oder anderen Mitteln ausgerüstet werden. Die erfindungsgemäßen thermoplastisch verarbeitbaren Polyesteramide können alleine oder mit den genannten Additiven versetzt, mit üblichen Füllstoffen gefüllt werden.

Folgende Nutzungen der Kombination von Polyesteramiden oder polyesteramidhaltigen Materialien (= PEA) mit den sie abbauenden Enzymen sind erfindungsgemäß:

- Einschluß von Chemikalien, Wirkstoffen, Hilfsmitteln, Enzymen, Mikroorganismen in PEA und deren gezielte Freisetzung durch den Zusatz von Enzymen

- Einsatz von PEA als Kleber oder Binder zum Herstellen von Verbundmaterialien oder Formteilen aus nicht formbaren Materialien mit dem Ziel, diese durch Zusatz von geeigneten Enzymen wieder aufzulösen

- Einsatz von Formkörpern, Flächengebilden oder Schäumen mit dem Ziel, diese durch eine Vorbehandlung mit Enzymen so weit abzubauen, daß sie nach Nutzung als Abfall über eine Kläranlage entsorgt werden können oder das Volumen des Abfalls reduziert wird.

- Herstellung von Formkörpern oder Flächengebilden, die durch den Zusatz geeigneter Enzyme gezielt porenhaltig gemacht werden können

- Herstellung von Fasern, Geweben, Textilien aus PEA, die durch den Einsatz von Enzymen aufgelöst oder in ihrem Volumen reduziert werden können

- Einsatz von Enzymen zum Abbau von PEA mit dem Ziel, daraus wäßrige Dispersionen herzustellen

- Selektive Entfernung von Beschichtungen, Überzügen, Hüllen aus PEA mit Hilfe von Enzymen

- Herstellung von Oligomeren aus PEA mit Hilfe von Enzymen

- Herstellung von Verpackungen aus PEA jeder Art mit dem Ziel, das Verpackte zu behandeln und nach der Behandlung durch Zusatz von Enzymen wieder freizusetzen

- Auflösen von Hygiene bags (Ostomy-Bags) für künstliche Darmausgänge mit Hilfe von Enzymen

## Beispiele

### Beispiel 1

0,3 g einer dünnen Blasfolie wurden zu 200 ml Puffer (50 mM·Kalium-Phosphat, pH 8,0, 0,02 % Na-Azid) gegeben. Anschließend wurden Enzyme in unterschiedlichen Mengen zugesetzt. Die Proben wurden unter Schütteln bei 220 rpm und 37°C für 20 Stunden inkubiert. Nach der Inkubation wurden die Lösungen über einen Filter (Porenweite 2 x 2 mm) gegeben und die durchlaufende Flüssigkeit über eine Saugflasche abgesaugt. Der Rückstand im Filter wurde bei 90°C getrocknet und anschließend gewogen. Der Abbau der Folie wurde über den Gewichtsverlust bestimmt.

Tab.: 1.

| Abbau von Folien aus Polyesteramid mit Enzymen | | | | |
|---|---|---|---|---|
| Ansatz | Organismus | Enzymmenge (v/v) | pH nach Inkubat. | Gewichtsverlust (%) |
| Folie + Puffer ohne Enzym | | 0 | 7,93 | 2 |
| Folie + Puffer + Opticlean | Bac.alcalophilus[1] | 1 % | 7,64 | 53 |
| Folie + Puffer + Opticlean | Bac.alcalophilus[1] | 5 % | 7,59 | 55 |
| Folie + Puffer + Protease | Bac. licheniformis[1] | 1 % | 7,51 | 71 |
| Folie + Puffer + Protease | Bac. licheniformis[1] | 5 % | 7,35 | 91 |
| Folie + Puffer + Esperase | Bacillus spec.[2] | 1 % | 7,66 | 47 |
| Folie + Puffer + Esperase | Bacillus spec.[2] | 5 % | 7,65 | 34 |
| Folie + Puffer + Alcalase | Bac. licheniformis[2] | 1 % | 7,53 | 75 |
| Folie + Puffer + Alcalase | Bac. licheniformis[2] | 5 % | 7,35 | 89 |

[1] Handelsprodukt der Fa. Solvay, Deutschland

[2] Handelsprodukt der Fa. Novo Nordisk, Dänemark

Wie aus der obigen Tabelle ersichtlich wurde ein nahezu vollständiger Folienabbau erreicht.

**Patentansprüche**

1. Verfahren zum enzymatischen Abbau von Polyesteramiden, wobei die Polyesteramide in einer wäßrigen Lösung, die gepuffert sein kann, mit Enzymen, ausgewählt aus der Gruppe der Proteasen, versetzt werden.

2. Verfahren gemäß Anspruch 1, wobei der pH-Wert der Lösung zwischen 3 und 11 liegt.

3. Verfahren gemäß Anspruch 1 bis 2, wobei die Temperatur zwischen 10 und 90°C liegt.

4. Verfahren gemäß Anspruch 1 bis 3, wobei die Proteasen aus Bakterien der Gattung Bacillus stammen.

5. Verfahren gemäß Anspruch 5, wobei die Proteasen der Organismen Bacillus alcalophilus und Bacillus licheniformis verwendet werden.

6. Verfahren gemäß Anspruch 1 bis 5, wobei die Polyesteramide aus aliphatischen $C_2$-$C_{12}$-Dialkoholen, $C_2$-$C_{12}$-aliphatische Dicarbonsäuren und/oder Amino-$C_1$-$C_{12}$-carbonsäuren und/oder cyclischen Lactamen mit einer Ringgröße von $C_5$ bis $C_{12}$ oder einem 1:1-Salz aus aliphatischer $C_4$-$C_{12}$-Dicarbonsäure und aliphatischem $C_4$-$C_6$-Diamin aufgebaut sind.

7. Verfahren gemäß Anspruch 1 bis 6, wobei der Esteranteil 35 bis 70 Gew.-%, bezogen auf die Gesamtmasse, beträgt.

**Claims**

1. Method for the enzymatic degradation of polyester amides, wherein the polyester amides are mixed with enzymes selected from the protease group in an aqueous solution, which may be buffered.

2. Method according to claim 1, wherein the pH value of the solution lies between 3 and 11.

3. Method according to claims 1 and 2, wherein the temperature lies between 10 and 90°C.

4. Method according to claims 1 to 3, wherein the proteases come from bacteria of the Bacillus genus.

5. Method according to claim 5, wherein the proteases of the organisms Bacillus alcalophilus and Bacillus licheniformis are used.

6. Method according to claims 1 to 5, wherein the polyester amides are composed of aliphatic $C_2$-$C_{12}$ dialcohols, $C_2$-$C_{12}$ aliphatic dicarboxylic acids and/or amino $C_1$-$C_{12}$ carboxylic acids and/or cyclic lactams with a ring size of $C_5$ to $C_{12}$ or a 1:1 salt of aliphatic $C_4$-$C_{12}$ dicarboxylic acid and aliphatic $C_4$-$C_6$ diamine.

7. Method according to claims 1 to 6, wherein the ester content is between 35 and 70 wt.%, related to the overall mass.

**Revendications**

1. Procédé de dégradation enzymatique de polyesteramides, selon lequel on ajoute des enzymes choisies dans le groupe des protéases aux polyesteramides dans une solution aqueuse pouvant être tamponnée.

2. Procédé selon la revendication 1, dans lequel le pH de la solution est compris entre 3 et 11.

3. Procédé selon les revendications 1 à 2, dans lequel la température est comprise entre 10 et 90°C.

4. Procédé selon les revendications 1 à 3, dans lequel les protéases sont issues de bactéries du genre *Bacillus.*

5. Procédé selon la revendication 5, dans lequel on utilise les protéases des organismes *Bacillus alcalophilus* et *Bacillus licheniformis.*

6. Procédé selon les revendications 1 à 5, dans lequel les polyesteramides sont synthétisés à partir de dialcools aliphatiques en $C_2$-$C_{12}$, d'acides dicarboxyliques aliphatiques en $C_2$-$C_{12}$ et/ou d'acides aminocarboxyliques en $C_1$-$C_{12}$ et/ou de lactames cycliques ayant un cycle en $C_5$-$C_{12}$ ou d'un sel 1:1 d'un acide dicarboxylique aliphatique en $C_4$-$C_{12}$ et d'une diamine aliphatique en $C_4$-$C_6$.

7. Procédé selon les revendications 1 à 6, dans lequel la proportion d'ester est de 35 à 70 % en masse par rapport à la masse totale.